# EUROPÄISCHE PATENTSCHRIFT

(11) **EP 3 292 371 B1**
(45) Veröffentlichungstag und Bekanntmachung des Hinweises auf die Patenterteilung: **06.05.2020**
(21) Anmeldenummer: 16720430.4
(22) Anmeldetag: 04.05.2016
(51) Int. Cl.: G01B 11/25, G06T 7/00

(54) **VORRICHTUNG UND VERFAHREN ZUM RÄUMLICHEN VERMESSEN VON OBERFLÄCHEN**
DEVICE AND METHOD FOR SPATIALLY MEASURING SURFACES
DISPOSITIF ET PROCÉDÉ DE MESURE DE SURFACES DANS L'ESPACE

(30) Priorität: 05.05.2015 DE 102015208285
(43) Veröffentlichungstag der Anmeldung: 14.03.2018
(73) Patentinhaber: Fraunhofer-Gesellschaft zur Förderung der angewandten Forschung e.V., 80686 München (DE)
(72) Erfinder: HEIST, Stefan, 07743 Jena (DE); NOTNI, Gunther, 07749 Jena (DE); SROKOS, Kevin, 07745 Jena (DE); LUTZKE, Peter, 07749 Jena (DE); SCHMIDT, Ingo, 07751 Jena (DE); KÜHMSTEDT, Peter, 07751 Jena (DE)
(74) Vertreter: Pfenning, Meinig & Partner mbB
(86) Internationale Anmeldenummer: PCT/EP2016/060073
(87) Internationale Veröffentlichungsnummer: WO 2016/177820

(56) Entgegenhaltungen:
- WO-A2-2014/000738
- DE-A1- 10 355 010
- DE-A1-102010 006 105
- US-A1- 2014 078 264
- US-B1- 6 542 250

## Beschreibung

Die Erfindung betrifft eine Vorrichtung zum räumlichen Vermessen von Oberflächen mit einem Projektor und zwei Kameras sowie ein Verfahren zum räumlichen Vermessen von Oberflächen, das mit dieser Vorrichtung durchgeführt werden kann.

Aus dem Stand der Technik sind Verfahren zum berührungslosen Vermessen von Oberflächen bekannt, bei denen mittels einer Projektionsvorrichtung eine Folge von jeweils aus einer Vielzahl von Streifen gebildeten Streifenmustern gleicher Streifenrichtung auf eine zu vermessende Oberfläche projiziert wird, wobei während des Projizierens jedes der Streifenmuster mit jeder von zwei Kameras jeweils ein Bild der Oberfläche aufgenommen wird. Mittels der auf die Oberfläche projizierten Streifenmuster werden dann korrespondierende Punkte in Bildebenen der Kameras identifiziert, worauf Raumkoordinaten von Oberflächenpunkten auf der Oberfläche durch Triangulation auf Basis der als korrespondierend identifizierten Punkte bestimmt werden.

Solche Verfahren sind z.B. aus den Druckschriften DE 10 2007 022 361A1 und DE 10 2006 049 695 A1 bekannt. Eine übliche Ausgestaltung solcher Verfahren sieht vor, dass einige der projizierten Streifenmuster phasenversetzte Streifenmuster mit sinusförmigem Helligkeitsverlauf sind, die es erlauben, jedem Punkt auf der Oberfläche einen Phasenwert zuzuordnen, während einige weitere der projizierten Streifenmuster einen Gray-Code definieren, der eine nach Bestimmung der Phasenwerte noch verbleibende Mehrdeutigkeit aufzulösen erlaubt.

Eine Schwierigkeit, die sich bei derartigen auf Musterprojektion beruhenden Triangulationsverfahren ergibt, liegt darin, dass eine verhältnismäßig große Anzahl von Mustern projiziert und entsprechend viele Bilder aufgenommen werden müssen, damit die korrespondierenden oder homologen Punkte in den Bildebenen eindeutig und hinreichend genau identifiziert werden können, was natürlich nicht in beliebig kurzer Zeit geschehen kann. Daher erfordert die Vermessung von Oberflächenkonturen mit den aus dem Stand der Technik bekannten Verfahren dieser Art eine verhältnismäßig lange Messdauer. Das ist für viele Anwendungen nachteilig, insbesondere wenn bewegte Oberflächen zu vermessen sind oder wenn dazu ein handgehaltenes Gerät verwendet werden soll.

In den Druckschriften US 6 542 250 B1 und US 2014/078264 A1 werden weitere Beispiele für Vorrichtungen und Verfahren zum räumlichen Vermessen von Oberflächen beschrieben.

Der Erfindung liegt die Aufgabe zugrunde, eine Vorrichtung vorzuschlagen, mit der Oberflächen möglichst genau berührungslos vermessen werden können, wobei eine möglichst kurze Messzeit zum Vermessen einer Oberfläche genügen soll. Der Erfindung liegt ferner die Aufgabe zugrunde, ein entsprechendes Verfahren zu entwickeln, das eine berührungslose Vermessung einer Oberflächenkontur mit hoher Genauigkeit bei ausgesprochen kurzer Messzeit ermöglicht.

Diese Aufgabe wird erfindungsgemäß gelöst durch eine Vorrichtung mit den Merkmalen des Hauptanspruchs sowie durch ein Verfahren mit den Merkmalen des Nebenanspruchs. Vorteilhafte Ausgestaltungen und Weiterentwicklungen der Erfindung ergeben sich mit den Merkmalen der Unteransprüche. Die vorgeschlagene Vorrichtung zum räumlichen Vermessen von Oberflächen umfasst einen Projektor zum Projizieren von Mustern in einen Objektraum, zwei Kameras zum Aufnehmen von Bildern einer zu vermessenden Oberfläche im Objektraum und eine Steuer- und Auswerteeinheit zum Ansteuern der Kameras und zum Auswerten der damit aufgenommenen Bilder. Dabei weist der Projektor eine Lichtquelle, ein Projektionsobjektiv und mindestens eine rotierbar angeordnete Musterstruktur als bildgebendes Element sowie einen Antrieb zum Rotieren der mindestens einen Musterstruktur auf, wobei die Steuer- und Auswerteeinheit eingerichtet ist, folgende Schritte auszuführen:
- Ansteuern der Kameras zum simultanen Aufnehmen jeweils eines Bildes zu einer Vielzahl von aufeinanderfolgenden Aufnahmezeitpunkten, so dass für Punkte in Bildebenen der Kameras jeweils eine Folge von Helligkeitswerten erfasst wird,
- Identifizieren korrespondierender Punkte in den Bildebenen der Kameras, indem zwischen den für potentiell korrespondierende Punkte erfassten Folgen von Helligkeitswerten eine Korrelationsfunktion ausgewertet wird und ein Wert einer so gebildeten Korrelation maximiert wird, und
- Bestimmen von Raumkoordinaten von Oberflächenpunkten auf der Oberfläche durch Triangulation auf Basis der als korrespondierend identifizierten Punkte.

Simultanes Aufnehmen von Bildern mit den beiden Kameras bedeute hier jeweils ein gleichzeitiges Aufnehmen, vorzugsweise mit gleicher Belichtungszeit. Durch die damit vorgeschlagene Ausführung des Projektors und durch die Art der Oberflächenvermessung und Auswertung, die sich mit der beschriebenen Einrichtung der Steuer- und Auswerteeinheit ergibt, werden ganz entscheidende Vorteile erzielt, was sich aus den nachfolgend erläuterten Zusammenhängen ergibt.

Um eine hinreichend genaue Vermessung der Oberfläche zu ermöglichen und, was dafür erforderlich ist, die homologen Punkte in den Bildebenen der beiden Kameras hinreichend genau zu identifizieren, muss nämlich eine möglichst große Zahl von Bildern mit verschiedenen auf die Oberfläche projizierten Mustern aufgenommen werden. Andererseits sollen alle zum Vermessen erforderlichen Bilder in möglichst kurzer Zeit aufgenommen werden, woraus sich ergibt, dass eine hohe Bildaufnahmefrequenz und mithin notwendigerweise möglichst kurze Belichtungszeiten und schnell wechselnde Muster von Vorteil sind. Gleichzeitig sollten zu große Blendenöffnungen der Objektive vermieden werden, um eine hinreichend große Schärfentiefe zu ermöglichen. Daraus wiederum ergibt sich, dass eine möglichst helle Ausleuchtung der Oberfläche vorteilhaft ist. Zusammengefasst sind also eine helle Lichtquelle, große Schärfentiefe, schnelle Änderungen der projizierten Muster und eine Aufnahme der Bilder mit schneller Bildfrequenz anzustreben. Einer befriedigenden Erfüllung aller dieser Erfordernisse sind bei den aus den Stand der Technik bekannten Vorrichtungen enge Grenzen gesetzt, zumal übliche Maßnahmen zur Erfüllung dieser Erfordernisse miteinander in dem Sinne konkurrieren, dass eine bessere Erfüllung des einen Erfordernisses die Erfüllung des anderen bei gegebener Lichtleistung umso schwieriger macht, während die lichtleistung bei üblicherweise verwendeten bildgebenden Elementen für Projektoren nicht beliebig gesteigert werden kann, ohne Schäden durch Hitze oder Gefährdungen durch Laserlicht zu vermeiden.

Die Merkmale der vorgeschlagenen Erfindung erlauben nun, alle genannten Erfordernisse in ungewöhnlich weitgehendem Maß zu erfüllen. Durch die Verwendung mindestens einer rotierenden Musterstruktur als bildgebendes Element können zunächst Muster projiziert werden, die sich in sehr kurzer Zeit ändern, so dass in sehr kurzer Zeit verhältnismäßig viele Bilder aufgenommen werden können, die die Oberfläche mit hinreichend unterschiedlichen Mustern beleuchtet zeigen. Dabei ist es vorteilhafterweise nicht nötig, die rotierende, also mechanisch bewegte Musterstruktur jeweils anzuhalten und wieder zu Beschleunigen, was die Realisierung einer hohen Bildfrequenz erleichtert. Gleichzeitig kann die Musterstruktur problemlos so ausgeführt werden, dass sie - anders als zum Beispiel ein Flüssigkristalldisplay oder ein anderer digitaler Bildgeber-hinreichend wenig hitzeempfindlich ist, um ausgesprochen hohe Lichtleistungen zu ermöglichen, was wiederum eine hinreichend helle Ausleuchtung der Oberfläche auch für kurze Belichtungszeiten und auch bei im Hinblick auf die Schärfentiefe vorteilhaften kleinen Blendenöffnungen erlaubt. Die vorgeschlagene Auswertung der Bilder wiederum, die ein Identifizieren der korrespondierenden Punkte in den Bildebenen durch Maximieren von Werten einer Korrelationsfunktion vorsieht, macht es möglich, die räumliche Vermessung durch Musterprojektion auch ohne Wissen über die genauen Eigenschaften der projizierten Muster zu realisieren. Zum Identifizieren der homologen Punkte in der beschriebenen Weise genügt es nämlich, wenn die Muster sich so ändern, dass die Folgen von Helligkeitswerten, die für die verschiedenen Punkte erfasst werden, hinreichend verschieden sind, was auch dann der Fall ist, wenn die Muster und ihre zeitliche Änderung statistischer oder quasistatistischer Natur sind.

Ein dementsprechend vorteilhaftes Verfahren zum räumlichen Vermessen von Oberflächen, das mit der vorgeschlagenen Vorrichtung durchgeführt werden kann, umfasst demnach folgende Schritte:
- Projizieren von sich zeitlich verändernden Mustern auf eine zu vermessende Oberfläche mittels eines Projektors, der eine Lichtquelle, ein Projektionsobjektiv und mindestens eine dabei rotierende Musterstruktur als bildgebendes Element aufweist,
- simultanes Aufnehmen jeweils eines Bildes der Oberfläche mit jeder von zwei Kameras zu einer Vielzahl von aufeinanderfolgenden Aufnahmezeitpunkten während des Projizierens, so dass für Punkte in Bildebenen der Kameras jeweils eine Folge von Helligkeitswerten erfasst wird,
- Identifizieren korrespondierender Punkte in den Bildebenen der Kameras, indem zwischen den für potentiell korrespondierende Punkte erfassten Folgen von Helligkeitswerten eine Korrelationsfunktion ausgewertet wird und ein Wert einer so gebildeten Korrelation maximiert wird,
- Bestimmen von Raumkoordinaten von Oberflächenpunkten auf der Oberfläche durch Triangulation auf Basis der als korrespondierend identifizierten Punkte.

Das Identifizieren der korrespondierenden Punkte oder homologen Punkte - diese Begriffe werden synonym verwendet - kann dadurch geschehen, dass für jeden einer Vielzahl von Punkten in der Bildebene einer ersten der beiden Kameras auf einer korrespondierenden Epipolarlinie in der Bildebene der zweiten Kamera nach dem dazu korrespondierenden Punkt gesucht wird, indem die Korrelationsfunktion zwischen der Folge von Helligkeitswerten, die für den jeweiligen Punkt in der Bildebene der ersten Kamera erfasst worden ist, und den Folgen von Helligkeitswerten, die für die Punkte auf der korrespondierenden Epipolarlinie in der Bildebene der anderen Kamera erfasst worden sind, ausgewertet wird. Der tatsächlich homologe Punkt lässt sich dann finden als der Punkt in der Bildebene der zweiten Kamera, für den die auf diese Weise gebildete Korrelation den größten Wert annimmt, für den also die Korrelationsfunktion ein Maximum annimmt und mithin der Wert der Korrelation maximiert wird. Dabei kann der jeweils korrespondierende Punkt subpixelgenau, also inklusive Subpixelinterpolation, bestimmt werden. Für jeden Punkt in der Bildebene der ersten Kamera kann die Suche nach dem korrespondierenden Punkt in der Bildebene der zweiten Kamera also auf Punkte beschränkt werden, die auf der genannten Epipolarlinie liegen, da nur diese als potentiell zu dem jeweiligen Punkt in der Bildebene der ersten Kamera korrespondierend in Frage kommen. Die Steuer- und Auswerteeinheit kann also eingerichtet sein, den Schritt des Identifizierens korrespondierender Punkte auf Paare von Punkten zu beschränken, die auf korrespondierenden Epipolarlinien liegen.

Die Korrelationsfunktion kann in weiten Grenzen beliebig gewählt werden und muss nur die für Korrelationsfunktionen typische Eigenschaft zeigen, bei ldentität der durch Auswertung der Korrelationsfunktion verglichenen Folgen ein Extremum - typischerweise ein Maximum - anzunehmen und diesem Extremum umso näher zu kommen, je ähnlicher die verglichenen Folgen sind. Sollte es sich bei diesem Extremum aufgrund der Definition der Korrelationsfunktion um ein Minimum handeln, so sei auch das Auffinden dieses Minimums als Maximieren im Sinne der vorliegenden Anmeldung zu verstehen.

Besonders hohe Lichtleistungen bzw. Leuchtdichten und mithin hohe Bildfrequenzen lassen sich erreichen, wenn der Projektor eine Lichtbogenlampe oder Gasentladungslampe, beispielsweise eine Xenon-Gasentladungslampe oder eine Metalldampflampe, als Lichtquelle aufweist. Diese erzeugen vorteilhafterweise nicht kohärentes Licht, so dass auf besondere Sicherheitsvorkehrungen für die Augen, wie bei Laserquellen üblich, verzichtet werden kann. Auch andere leistungsstarke und vorzugsweise nicht kohärente Lichtquellen können natürlich als Lichtquelle des Projektors verwendet werden.

Als Musterstruktur des Projektors wird mindestens eine rotierende Scheibe oder mindestens eine rotierende Zylinderoberfläche - also ein trommelähnliches Element - oder ein in sich geschlossenes, um mindestens zwei Rollen geführtes und unter Drehung der Rollen in Bandrichtung rotierendes Band verwendet. Damit ergibt sich ein sehr einfacher Aufbau des Projektors. Es sei darauf hingewiesen, dass ein in sich geschlossenes umlaufendes Band als rotierend im Sinne der vorliegenden Schrift verstanden wird. Bei diesem Band kann es sich z.B. um einen Film handeln.

Die Musterstruktur kann binäre Muster oder Muster mit graustufenähnlichem Verlauf aufweisen. Bei einer Verwendung binärer Muster kann in den aufgenommenen Bildern ein graustufiger Verlauf durch eine ohnehin kaum vermeidbare, aber auch unschädliche oder sogar vorteilhafte Bewegungsunschärfe erreicht werden. Die Musterstruktur bzw. jede der Musterstrukturen kann z.B. als Stahlblech mit entsprechenden Durchbrüchen oder auch als Chrommaske auf einem Glasträger realisiert werden.

Die mindestens eine zur Erzeugung der Muster verwendete Musterstruktur weist ein aperiodisches Streifenmuster mit in radialer Richtung der Scheibe bzw. parallel zu einer Symmetrieachse der Zylinderoberfläche bzw. quer zur Bandbewegungsrichtung orientierten Streifen auf. Die damit erzeugten Muster zeigen also eine Streifenstruktur, was hinreichend ist, insbesondere wenn die beiden Kameras in einer Richtung quer zu diesen Streifen voneinander beabstandet angeordnet sind und wenn die Epipolarliniengeometrie in der oben erläuterten Weise ausgenutzt wird.

Es kann vorgesehen sein, dass das Streifenmuster in einer Umgebung jedes der Streifen oder einiger der Streifen einen jeweils sinusförmigen Helligkeitsverlauf hat, wobei eine Ortsfrequenz des Streifenmusters in einer Richtung quer zu den Streifen nicht konstant ist. Alternativ möglich sind auch binäre Streifenmuster mit quasistatistisch wechselnden Streifenbreiten und Streifenabständen. Mit allen diesen Varianten lässt sich besonders einfach erreichen, dass die Folgen von Helligkeitswerten, die für die verschiedenen Punkte in den aufgenommenen Bildern erfasst werden, hinreichend verschieden sind, was wiederum eine sehr präzise Identifizierung homologer Punkte - und zwar typischerweise subpixelgenau, also inklusive Subpixelinterpolation - durch Maximieren der genannten Korrelation ermöglicht.

Es können aber auch in sehr weiten Grenzen beliebige andere Muster und dementsprechend anders gestaltete Musterstrukturen verwendet werden, deren genaue Struktur nicht einmal bekannt sein muss, da es genügt, wenn sich die erfassten Folgen von Helligkeitswerten für die verschiedenen Punkte auf der Oberfläche signifikant unterscheiden, was z.B. praktisch unvermeidbar ist, wenn statistische oder quasistatistische Muster projiziert werden.

Typischerweise wird die mindestens eine Musterstruktur so angetrieben, dass sie während des Projizierens der Muster und des Aufnehmens der Bilder fortlaufend mit einer gleichmäßigen Geschwindigkeit rotiert. Dabei kann während einer einzigen vollständigen Umdrehung der mindestens einen Musterstruktur mit jeder der Kameras jeweils eine Vielzahl der Bilder aufgenommen werden. Der zum Rotieren der mindestens einen Musterstruktur vorgesehene Antrieb kann also eingerichtet sein, die mindestens eine Musterstruktur fortlaufend mit einer gleichmäßigen Geschwindigkeit zu rotieren, während die Steuer- und Auswerteeinheit typischerweise eingerichtet ist, die Kameras so anzusteuern, dass während einer einzigen vollständigen Umdrehung der mindestens einen Musterstruktur oder sogar während weniger als einer vollständigen Umdrehung mit jeder der Kameras jeweils eine Vielzahl der Bilder aufgenommen wird. Dabei kann es genügen, wenn sich das projizierte Muster zwischen zwei aufeinanderfolgenden Aufnahmen um deutlich weniger als eine vollständige Bildbreite - bezogen auf die Gesichtsfelder der Kameras - weiterbewegt. So kann eine hohe Bildfrequenz erreicht werden, ohne dass durch Abbremsen und Beschleunigung der mindestens einen Musterstruktur Zeit verloren geht oder nachteilige Rüttelbewegungen verursacht werden. Insbesondere entfallen die normalerweise benötigten langen Pausen zwischen zwei Belichtungen bei einem Start-Stopp-Bewegungsregime.

Die Musterstruktur kann auf besonders einfache Weise realisiert werden, wenn sie ein binäres Muster zum Erzeugen der in den Objektraum projizierten Muster aufweist. Es kann also vorgesehen sein, dass die auf die Oberfläche projizierten Muster durch ein binäres Muster der mindestens einen Musterstruktur erzeugt werden. Wenn die Musterstruktur beim Aufnehmen der Bilder fortlaufend weiterrotiert wird, ergeben sich auch in diesem Fall effektiv Muster mit Grautönen bzw. stetigem Helligkeitsverlauf, weil die Bilder jeweils mit endlicher Belichtungszeit aufgenommen werden, so dass sich die letztlich erfassten Muster durch zeitliche Integration ergeben. Daher können die korrespondierenden Punkte bei einer Verwendung geeigneter binärer Muster letztlich genauso genau identifiziert werden wie bei einer Verwendung von Mustern mit stetigem Verlauf. Die binären Muster, die typischerweise durch opake Bereiche vor transparentem Hintergrund realisier sind, können z.B. so gestaltet sein, dass sich nach der zeitlichen Integration über die Belichtungszeiten jeweils ein aperiodisches Streifenmuster oben beschriebener Art ergibt. Die binären Muster können ihrerseits jeweils aperiodische Streifenmuster oder auch Muster mit sich -z.B. bei einer scheibenförmigen Msuterstruktur von innen nach außen -verzweigenden Streifen oder ungleichmäßig angeordneten Punkten oder Flecken sein.

Durch die beschriebenen Maßnahmen ist es insbesondere möglich, dass die Bilder mit einer Bildfrequenz von mehr als 500 Hz oder sogar mehr als 1 kHz aufgenommen werden, typischerweise mit einer Bildfrequenz von zwischen 1 kHz und 100 kHz, weshalb die Steuer- und Auswerteeinheit eingerichtet sein kann, die Kameras zum Aufnehmen der Bilder mit einer entsprechend hohen Bildfrequenz anzusteuern.

Zum Aufnehmen jedes der Bilder kann beispielsweise eine Belichtungszeit verwendet werden, die zwischen 5% und 50% eines zeitlichen Abstandes zwischen den unmittelbar aufeinanderfolgenden Aufnahmezeitpunkten beträgt, typischerweise zwischen 10% und 50% dieses zeitlichen Abstandes. Die Bildfrequenz entspricht dabei dem Kehrwert des genannten zeitlichen Abstands. Dadurch wird einerseits immer noch eine hinreichend lange Belichtung realisiert, während sich gleichzeitig noch eine über die Belichtungszeit gemittelte Ausleuchtung der Oberfläche mit hinreichend markanten und von Bild zu Bild hinreichend unterschiedlichen Mustern realisieren lässt.

Es kann vorgesehen sein, dass der Projektor zwei der Musterstrukturen oder zwei gleichzeitig durchleuchtete Teile der Musterstruktur aufweist, die durch den Antrieb relativ zueinander bewegbar sind zur Erzeugung zeitlich veränderlicher Moire-Muster. Die projizierten Muster können also als zeitlich veränderliche Moire-Muster durch zwei der Musterstrukturen oder durch zwei gleichzeitig durchleuchtete Teile der Musterstruktur des Projektors erzeugt werden, wobei die zwei Musterstrukturen oder die zwei gleichzeitig durchleuchteten Teile der Musterstruktur relativ zueinander bewegt werden. Die zwei Musterstrukturen können ggf. beispielsweise in Form zweier gegensinnig oder unterschiedlich schnell rotierender dicht aneinander angeordneter Scheiben oder ineinander angeordneter Zylinderoberflächen ausgeführt sein. Bei den zwei gleichzeitig durchleuchteten Teilen der Musterstruktur kann es sich dagegen z.B. um zwei gegenläufig bewegte Abschnitte des gleichen in sich geschlossenen Bandes handeln. Mit all diesen Varianten lässt sich erreichen, dass sich die projizierten Muster, in diesem Fall also die Moire-Muster, durch die Relativbewegung zwischen den durchleuchteten Musterstrukturen oder Teilen der Musterstruktur wesentlich schneller bewegen und mithin ändern, als es bei einer einzigen gleich schnell rotierenden Musterstruktur der Fall wäre. So kann also eine laterale Geschwindigkeit der Musterüberlagerung, die das jeweilige Moire-Muster ergibt, erreicht werden, die sehr viel größer ist als die eigentliche Bewegungsgeschwindigkeit der einzelnen Muster, deren Überlagerung zum Moire-Muster führt. Auch das erleichtert die Realisierung einer sehr hohen Bildfrequenz bei gleichzeitig hinreichend großen Unterschieden zwischen den Mustern, die während des Aufnehmens der einzelnen Bilder projiziert werden.

Ausführungsbeispiele der Erfindung werden nachfolgend anhand der Figuren 1 bis 7 erläutert. Es zeigen
- Fig. 1: In schematischer Darstellung eine Aufsicht auf eine Vorrichtung zum räumlichen Vermessen von Oberflächen,
- Fig. 2: In perspektivischer Darstellung einen Projektor dieser Vorrichtung in einer ersten beispielhaften Ausführung,
- Fig. 3: in perspektivischer Darstellung einen anders ausgeführten Projektor einer Abwandlung dieser Vorrichtung,
- Fig. 4: als Schnittzeichnung eine weitere Ausführung eines Projektors einer durch mit diesem Projektor erhaltenen weiteren Abwandlung dieser Vorrichtung,
- Fig. 5: als Schnittzeichnung einen anders gestalteten Projektor, der statt Projektoren aus den vorangegangenen Figuren in der Vorrichtung zum räumlichen Vermessen von Oberflächen verwendet werden kann,
- Fig. 6: in perspektivischer Darstellung eine Abwandlung des Projektors aus Fig. 2, der ebenfalls in der ansonsten gleichen Vorrichtung verwendet werden kann, und
- Fig. 7: in entsprechender Darstellung noch einen Projektor, bei dem es sich um eine Abwandlung des Projektors aus Fig. 3 handelt und der auch anstelle der anderen gezeigten Projektoren in der Vorrichtung zum räumlichen Vermessen von Oberflächen verwendet werden kann.

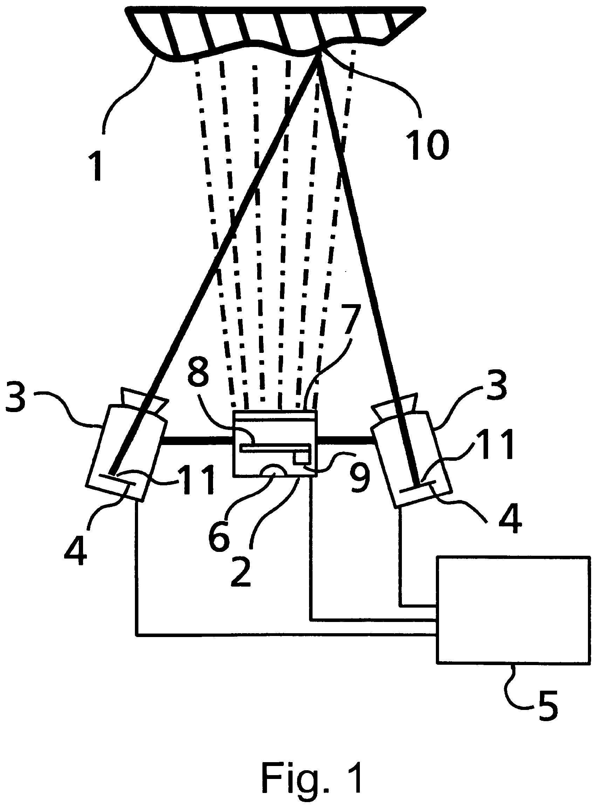

In Fig. 1 ist eine Vorrichtung gezeigt, die zum berührungslosen räumlichen Vermessen von Oberflächen geeignet ist. In einem Objektraum vor dieser Vorrichtung ist beispielhaft ein Testkörper mit einer zu vermessenden Oberfläche 1 dargestellt. Die Vorrichtung weist einen hier nur schematisch dargestellten Projektor 2 zum Projizieren von Mustern in den Objektraum sowie zwei Kameras 3 zum Aufnehmen von Bildern der Oberfläche 1 auf. Jede dieser Kameras 3 hat einen Bildsensor 4, der in einer Bildebene der jeweiligen Kamera 3 angeordnet ist. Schließlich weist die Vorrichtung auch eine Steuer- und Auswerteeinheit 5 zum Ansteuern des Projektors 2 und der Kameras 3 und zum Auswerten der damit aufgenommenen Bilder auf. Die Kameras 3 sind fest miteinander verbunden und haben also relativ zueinander eine feste und bekannte Anordnung und Orientierung. Eine dadurch bekannte innere Geometrie der Vorrichtung ermöglicht eine berührungslose Vermessung der Oberfläche 1 durch ein weiter unten genauer beschriebenes Triangulationsverfahren.

Der Projektor 2 weist eine sehr leistungsstarke Lichtquelle 6 auf, bei der es sich z.B. um eine Xenon-Gasentladungslampe oder eine Metalldampflampe oder eine Lichtbogenlampe oder eine LED handeln kann. Außerdem weist der Projektor ein Projektionsobjektiv 7 und mindestens eine rotierbare Musterstruktur 8 auf sowie einen Antrieb 9, der die Musterstruktur 8 so antreibt, dass sie sich fortlaufend mit einer gleichmäßigen Rotationsgeschwindigkeit dreht.

Bei Vermessen der Oberfläche 1 durch die dargestellte Vorrichtung werden dadurch Muster auf die Oberfläche 1 projiziert, die sich zeitlich verändern. Typischerweise haben diese Muster jeweils eine Streifenstruktur mit zumindest weitgehend parallelen Streifen unterschiedlicher Breite und unregelmäßiger Abstände, wobei die Streifen senkrecht zur Zeichenebene orientiert sind und mithin senkrecht auf Epipolarlinien stehen, die durch die Geometrie der Vorrichtung in den durch die Bildsensoren 4 aufgespannten Bildebenen der beiden Kameras 3 definiert sind.

Die Kameras 3 werden nun durch die Steuer- und Auswerteeinheit 5 so angesteuert, dass jede dieser Kameras 3 während des Projizierens der Muster zu einer Vielzahl aufeinanderfolgender Zeitpunkte simultan, also gleichzeitig mit der jeweils anderen Kamera 3, und jeweils mit gleicher Belichtungszeit jeweils ein Bild der Oberfläche 1 aufnimmt. So wird mit jeder der Kameras 3 jeweils eine Folge von Bildern aufgenommen, von denen jedes einem der genannten Zeitpunkte zuzuordnen ist und mithin einem Muster, das zu dem jeweiligen Zeitpunkt - genauer über die jeweilige Belichtungszeit gemittelt - projiziert wird. Dabei werden die Kameras 3 so angesteuert, dass während einer einzigen vollständigen oder sogar nur teilweisen Umdrehung der mindestens einen Musterstruktur 8 mit jeder der beiden Kameras 3 bereits jeweils eine Vielzahl von Bildern aufgenommen wird. Dazu werden die Bilder mit einer Bildfrequenz von typischerweise zwischen 1 kHz und 100 kHz, beispielsweise etwa 10 kHz, aufgenommen, wobei eine Belichtungszeit für jedes der Bilder zwischen 5 µs und 50 µs beträgt.

Durch Auswerten der aufgenommenen Bilder mittels der entsprechend programmierten Steuer- und Auswerteeinheit 5 werden nun korrespondierende oder homologe Punkte in den Bildebenen der beiden Kameras 3 identifiziert, und zwar anhand der auf die Oberfläche 1 projizierten Muster. Als homolog oder korrespondierend werden dabei solche Punkte in den Bildebenen der beiden Kameras 3 bezeichnet, auf die jeweils ein gleicher Oberflächenpunkt der Oberfläche 1 abgebildet wird. Für einen ausgewählten Oberflächenpunkt 10, der auf die zwei korrespondierenden Punkte 11 abgebildet wird, ist das in Fig. 1 beispielhaft dargestellt. Zum Identifizieren der korrespondierenden Punkte wird dabei ausgenutzt, dass sich für jeden Punkt in den Bildebenen jeder der Kameras 3 wegen der sich zeitlich ändernden Muster jeweils eine Folge von Helligkeitswerten ergibt, die sich in der mit der jeweiligen Kamera 3 aufgenommenen Folge von Bildern wiederfindet und dadurch für jeden der Punkte erfasst wird.

Die mindestens eine Musterstruktur 8 ist so gestaltet, dass diese Folgen von Helligkeitswerten quasi statistisch sind und sich insbesondere zumindest senkrecht zur Streifenrichtung von Oberflächenpunkt zu Oberflächenpunkt unterscheiden. Das ausnutzend werden die korrespondierenden Punkte nun jeweils durch Maximieren einer Korrelation identifiziert, die zwischen den für die potentiell korrespondierenden Punkte erfassten Folgen von Helligkeitswerten gebildet wird. Dazu wird eine - in weiten Grenzen beliebig wählbare - Korrelationsfunktion für eine Vielzahl von Paaren von Helligkeitswertefolgen ausgewertet und das Ergebnis dieser Auswertung - nämlich ein dadurch für jedes Paar verglichener Punkte ermittelter Korrelationswert - zum Auffinden der Paare korrespondierender bzw. homologer Punkte maximiert. Unter Ausnutzung der Epipolargeometrie wird die zu maximierende Korrelation bzw. Korrelationsfunktion dabei jeweils nur für Punkte auf korrespondierenden Epipolarlinien gebildet bzw. ausgewertet. Für jeden Punkt in der Bildebene einer ersten der beiden Kameras 3 wird also nur auf einer korrespondierenden Epipolarlinie in der Bildebene der verbleibenden Kamera 3 nach dem korrespondierenden Punkt gesucht. Die korrespondierenden Punkte können dabei mit einer Ortsauflösung gefunden werden, die höher ist als ein durch eine Pixelmatrix der Bildsensoren 4 definierte Bildauflösung, weil durch Interpolation auch für Punkte, die nicht exakt mit einer Pixelposition übereinstimmen, Helligkeitswerte und dementsprechend Folgen von Helligkeitswerten gebildet werden können.

Auf Basis der so als korrespondierend identifizierten Punkte in den Bildebenen der Kameras 3 werden nun durch die Steuer- und Auswerteeinheit 5 durch Triangulation Raumkoordinaten der Oberflächenpunkte der Oberfläche 1 bestimmt, was aufgrund der bekannten Geometrie der Vorrichtung durch Anwendung einfacher trigonometrischer Zusammenhänge geschehen kann.

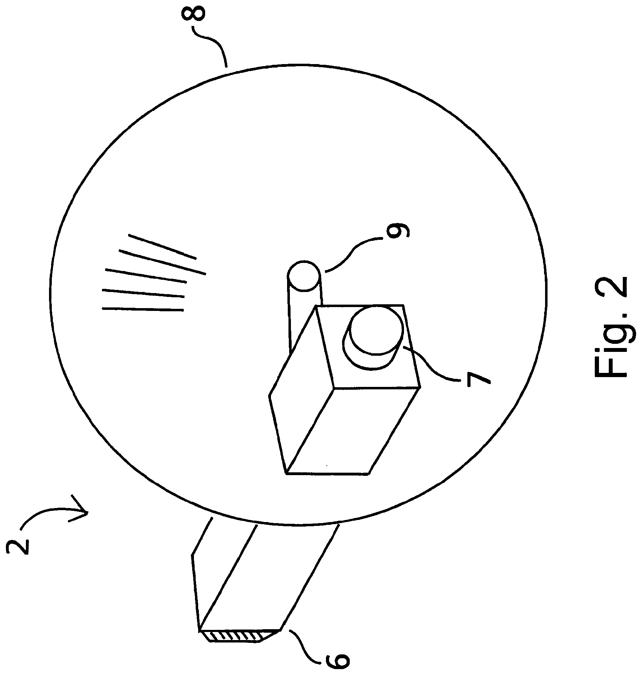

Die folgenden Figuren 2 bis 7 zeigen anhand verschiedener Beispiele, wie der Projektor 2 ausgeführt werden kann. Gleiche oder entsprechende Merkmale sind dabei jeweils mit den gleichen Bezugszeichen versehen.

In Fig. 2 ist eine Ausführung des Projektors 2 gezeigt, bei dem die Musterstruktur 8 als rotierende Scheibe ausgeführt ist. Die Musterstruktur 8 ist dabei durch ein Stahlblech mit Durchbrüchen oder als Chrommaske auf einem Glasträger realisiert. Dabei weist die Musterstruktur 8 ein aperiodisches Streifenmuster mit in radialer Richtung der Scheibe orientierten Streifen auf. Die hier nicht dargestellten Kameras 3 sind dabei so angeordnet, dass sie in einer Richtung quer zu den dadurch projizierten Streifen voneinander beabstandet sind. Dazu sind die Kameras 3 in einer horizontalen Ebene rechts und links neben dem Projektor 2 platziert. Das von der Musterstruktur 8 getragene Streifenmuster hat entweder in einer Umgebung jedes der Streifen einen jeweils sinusförmigen Helligkeitsverlauf, wobei eine Ortsfrequenz des Streifenmusters in einer Richtung quer zu den Streifen nicht konstant ist, oder es ist ein binäres Streifenmuster mit quasistatistisch wechselnden Streifenbreiten und Streifenabständen.

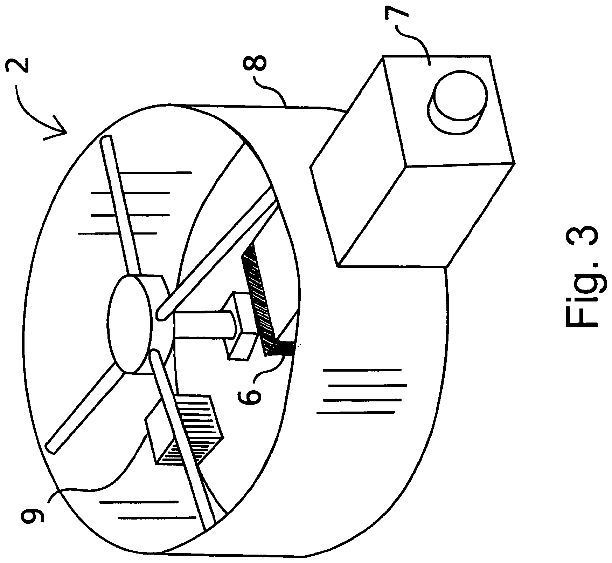

Fig. 3 zeigt eine andere Ausführung des Projektors 2. Hier hat die Musterstruktur 8 die Form einer rotierenden Zylinderoberfläche, ist also trommelartig ausgeführt. Dabei trägt die Musterstruktur 8 ein aperiodisches Streifenmuster mit Streifen, die parallel zu einer Symmetrie- und Drehachse der Musterstruktur 8 orientiert sind. Ansonsten gilt für diesen Projektor 2 das gleiche wie für den zuvor anhand Fig. 2 beschriebene Ausführung.

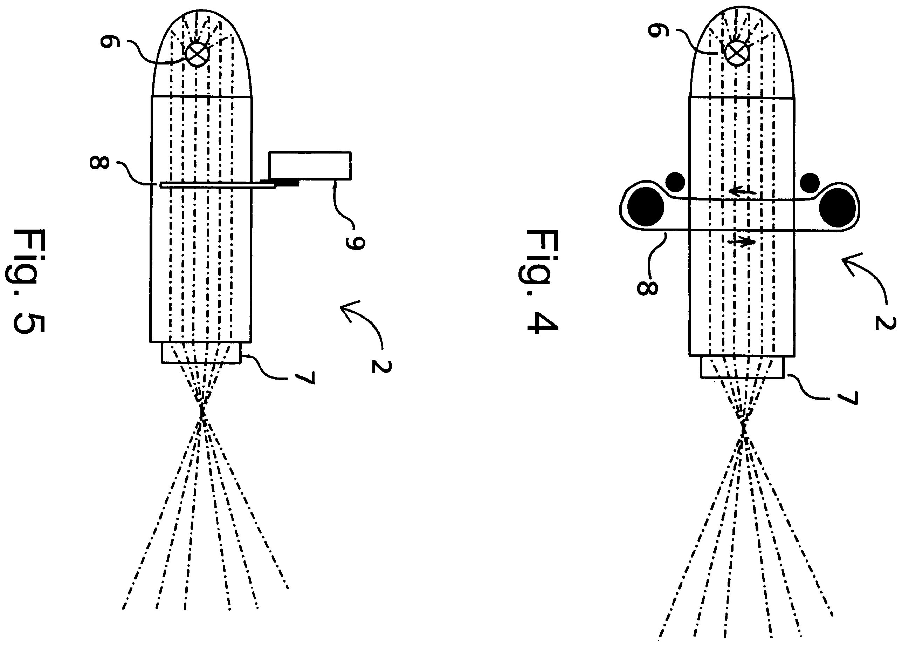

Fig. 4 zeigt einen Projektor 2, der anstelle der zuvor beschriebenen Ausführungen verwendet werden kann und sich davon dadurch unterscheidet, dass die Musterstruktur 8 in diesem Fall durch ein in sich geschlossenes rotierendes Band gegeben ist, dass dazu über vier Rollen geführt ist. Eine dieser Rollen kann durch den hier nicht dargestellten Antrieb angetrieben werden, um ein gleichmäßiges Umlaufen des Bandes zu bewirken, was in Fig. 4 durch zwei Pfeile veranschaulicht ist. Das Band trägt ein aperiodisches Streifenmuster zuvor beschriebener Art, wobei die Streifen des Streifenmusters in diesem Fall quer zur Bandrichtung, also senkrecht zur Zeichenebene, orientiert sind. Wie in Fig. 4 zu erkennen ist, werden zu jedem Zeitpunkt zwei Abschnitte des Bandes durchleuchtet, die sich in engem Abstand voneinander in entgegengesetzter Richtung durch einen Strahlengang des Projektors 2 bewegen. Dadurch entstehen Moire-Muster, die dieser Projektor 2 in den Objektraum projiziert und die sich deutlich schneller in lateraler Richtung bewegen als die einzelnen Bestandteile der projizierten Muster, die durch die einzelnen der beiden durchleuchteten Abschnitte verursacht werden. Dadurch ändern sich die projizierten Muster bei dieser Ausführung bei gegebener Umlaufgeschwindigkeit des Bandes besonders schnell, weshalb die Bildfrequenz auch bei vergleichsweise geringer Umlaufgeschwindigkeit hoch gewählt werden kann.

Eine weitere Ausführung des Projektors 2 ist in Fig. 5 dargestellt. Hier ist die Musterstruktur 8 wieder, ähnlich wie bei dem Ausführungsbeispiel aus Fig. 2, als Scheibe ausgeführt, wobei der Antrieb 9 in diesem Fall nach dem Prinzip eines Winkelschleifers gestaltet ist. Dadurch macht die Musterstruktur 8 eine sehr unregelmäßige Rotationsbewegung, was für das beschriebene Triangulationsverfahren günstig sein kann.

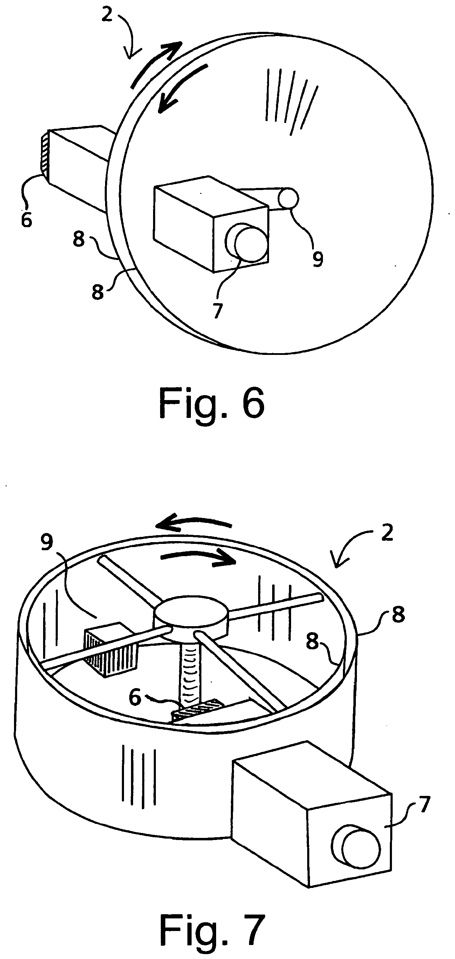

In den Figuren 6 und 7 sind schließlich zwei weitere Projektoren 2 gezeigt, bei denen es sich um Abwandlungen der Ausführungen aus den Figuren 2 und 3 handelt. Von diesen unterscheiden sich die Projektoren 2 aus den Figuren 6 und 7 nur dadurch, dass sie jeweils zwei Musterstrukturen 8 aufweisen, die jeweils ähnlich ausgeführt sind wie die Musterstruktur 8 aus fig. 2 bzw. Fig. 3 und die sich gegensinnig drehen. Das ist in den Figuren 6 und 7 jeweils durch zwei Pfeile veranschaulicht. Stattdessen wäre es auch möglich, dass die beiden Musterstrukturen 8 gleichsinnig, jedoch mit unterschiedlichen Drehgeschwindigkeiten rotieren. Ähnlich wie bei dem Ausführungsbeispiel aus Fig. 4 entstehen dadurch jeweils Moire-Muster, die sich auch bei verhältnismäßig langsamer Drehbewegung der Musterstrukturen 8 sehr schnell verändern.

Anstelle der hier beispielhaft genannten Streifenmuster können die Musterstrukturen 8 der verschiedenen Ausführungsbeispiele auch jeweils Muster anderer Gestalt aufweisen, z.B. Muster mit sich verzweigenden Streifen oder mit ungleichmäßig verteilten Flecken oder Punkten, wobei die Muster insbesondere jeweils binärer Natur sein können. Wegen der endlichen Belichtungszeiten der einzelnen Aufnahmen ergeben sich auch damit effektiv auf der Oberfläche 1 jeweils Muster mit stetigen Helligkeitsverläufen. Typischerweise werden die Muster auf der Musterstruktur 8 jeweils in Bewegungsrichtung einer durch die Rotation gegebenen Bewegung der Musterstruktur 8 aperiodisch sein, um eine zuverlässige Identifikation korrespondierender Punkte mit Hilfe der beschriebenen Korrelation zu ermöglichen.

## Patentansprüche

1. Vorrichtung zum räumlichen Vermessen von Oberflächen, umfassend einen Projektor (2) zum Projizieren von Mustern in einen Objektraum, zwei Kameras (3) zum Aufnehmen von Bildern einer zu vermessenden Oberfläche (1) im Objektraum und eine Steuer- und Auswerteeinheit (5) zum Ansteuern der Kameras (3) und zum Auswerten der damit aufgenommenen Bilder,
wobei der Projektor (2) eine Lichtquelle (6), ein Projektionsobjektiv (7) und mindestens eine rotierbar angeordnete Musterstruktur (8) als bildgebendes Element sowie einen Antrieb (9) zum Rotieren der mindestens einen Musterstruktur (8) aufweist und
wobei die Steuer- und Auswerteeinheit (5) eingerichtet ist, folgende Schritte auszuführen:
- Ansteuern der Kameras (3) zum simultanen Aufnehmen jeweils eines Bildes zu einer Vielzahl von aufeinanderfolgenden Aufnahmezeitpunkten, so dass für Punkte in Bildebenen der Kameras (3) jeweils eine Folge von Helligkeitswerten erfasst wird,
- Identifizieren korrespondierender Punkte (11) in den Bildebenen der Kameras (3), indem zwischen den für potentiell korrespondierende Punkte erfassten Folgen von Helligkeitswerten eine Korrelationsfunktion ausgewertet wird und ein Wert einer so gebildeten Korrelation maximiert wird,
- Bestimmen von Raumkoordinaten von Oberflächenpunkten (10) auf der Oberfläche (1) durch Triangulation auf Basis der als korrespondierend identifizierten Punkte (11),
wobei die mindestens eine Musterstruktur (8) in Form einer rotierbaren Scheibe oder einer rotierbaren Zylinderoberfläche oder eines in sich geschlossenen, um mindestens zwei Rollen geführten und unter Drehung der Rollen in Bandrichtung rotierbaren Bandes ausgeführt ist und wobei die Musterstruktur (8) ein aperiodisches Streifenmuster mit in radialer Richtung der Scheibe oder parallel zu einer Symmetrieachse der Zylinderoberfläche oder quer zur Bandrichtung orientierten Streifen aufweist.

2. Vorrichtung nach Anspruch 1, **dadurch gekennzeichnet, dass** das Streifenmuster in einer Umgebung jedes der Streifen oder einiger der Streifen einen jeweils sinusförmigen Helligkeitsverlauf hat, wobei eine Ortsfrequenz des Streifenmusters in einer Richtung quer zu den Streifen nicht konstant ist.

3. Vorrichtung nach einem der Ansprüche 1 oder 2, **dadurch gekennzeichnet, dass** der Antrieb (9) eingerichtet ist, die mindestens eine Musterstruktur (8) fortlaufend mit einer gleichmäßigen Geschwindigkeit zu rotieren, wobei die Steuer- und Auswerteeinheit (5) eingerichtet ist, die Kameras (3) so anzusteuern, dass während einer einzigen vollständigen oder teilweisen Umdrehung der mindestens einen Musterstruktur (8) mit jeder der Kameras (3) jeweils eine Vielzahl der Bilder aufgenommen wird.

4. Vorrichtung nach einem der Ansprüche 1 oder 3, **dadurch gekennzeichnet, dass** die Musterstruktur ein binäres Muster zum Erzeugen der in den Objektraum projizierten Muster aufweist.

5. Vorrichtung nach einem der Ansprüche 1 bis 4, **dadurch gekennzeichnet, dass** die Steuer- und Auswerteeinheit (5) eingerichtet ist, die Kameras (3) zum Aufnehmen der Bilder mit einer Bildfrequenz von mindestens 500 Hz anzusteuern.

6. Vorrichtung nach einem der Ansprüche 1 bis 5, **dadurch gekennzeichnet, dass** die Kameras (3) und die Steuer- und Auswerteeinheit (5) so eingerichtet sind, dass eine zum Aufnehmen jedes der Bilder verwendete Belichtungszeit zwischen 5% und 50% eines zeitlichen Abstandes zwischen den unmittelbar aufeinanderfolgenden Aufnahmezeitpunkten beträgt.

7. Vorrichtung nach einem der Ansprüche 1 bis 6, **dadurch gekennzeichnet, dass** der Projektor (2) zwei der Musterstrukturen (8) oder zwei gleichzeitig durchleuchtete Teile der Musterstruktur (8) aufweist, die durch den Antrieb (9) relativ zueinander bewegbar sind zur Erzeugung zeitlich veränderlicher Moire-Muster.

8. Vorrichtung nach einem der Ansprüche 1 bis 7, **dadurch gekennzeichnet, dass** die Lichtquelle (6) eine Lichtbogenlampe oder Gasentladungslampe ist.

9. Verfahren zum räumlichen Vermessen von Oberflächen, umfassend folgende Schritte:
- Projizieren von sich zeitlich verändernden Mustern auf eine zu vermessende Oberfläche (1) mittels eines Projektors (2), der eine Lichtquelle (6), ein Projektionsobjektiv (7) und mindestens eine dabei rotierende Musterstruktur (8) als bildgebendes Element aufweist,
- simultanes Aufnehmen jeweils eines Bildes der Oberfläche (1) mit jeder von zwei Kameras (3) zu einer Vielzahl von aufeinanderfolgenden Aufnahmezeitpunkten während des Projizierens, so dass für Punkte in Bildebenen der Kameras (3) jeweils eine Folge von Helligkeitswerten erfasst wird,
- Identifizieren korrespondierender Punkte (11) in den Bildebenen der Kameras (3), indem zwischen den für potentiell korrespondierende Punkte erfassten Folgen von Helligkeitswerten eine Korrelationsfunktion ausgewertet wird und ein Wert einer so gebildeten Korrelation maximiert wird,
- Bestimmen von Raumkoordinaten von Oberflächenpunkten (10) auf der Oberfläche (1) durch Triangulation auf Basis der als korrespondierend identifizierten Punkte (11),
wobei mindestens eine rotierende Scheibe oder mindestens eine rotierende Zylinderoberfläche oder ein in sich geschlossenes, um mindestens zwei Rollen geführtes und unter Drehung der Rollen in Bandrichtung rotierendes Band als Musterstruktur (8) des Projektors (2) verwendet wird und wobei die Muster durch ein aperiodisches Streifenmuster der mindestens einen Musterstruktur (8) mit in radialer Richtung der Scheibe oder parallel zu einer Symmetrieachse der Zylinderoberfläche oder quer zur Bandrichtung orientierten Streifen erzeugt werden.

10. Verfahren nach Anspruch 9, **dadurch gekennzeichnet, dass** das Streifenmuster in einer Umgebung jedes der Streifen oder einiger der Streifen einen jeweils sinusförmigen Helligkeitsverlauf hat, wobei eine Ortsfrequenz des Streifenmusters in einer Richtung quer zu den Streifen nicht konstant ist.

11. Verfahren nach einem der Ansprüche 9 oder 10, **dadurch gekennzeichnet, dass** die mindestens eine Musterstruktur (8) während des Projizierens der Muster und des Aufnehmens der Bilder durch einen Antrieb (9) fortlaufend mit einer gleichmäßigen Geschwindigkeit rotiert wird, wobei während einer einzigen vollständigen oder teilweisen Umdrehung der mindestens einen Musterstruktur (8) mit jeder der Kameras (3) jeweils eine Vielzahl der Bilder aufgenommen wird.

12. Verfahren nach einem der Ansprüche 9 oder 11, **dadurch gekennzeichnet, dass** die auf die Oberfläche (1) projizierten Muster durch ein binäres Muster der mindestens einen Musterstruktur (8) erzeugt werden.

13. Verfahren nach einem der Ansprüche 9 bis 12, **dadurch gekennzeichnet, dass** die Bilder mit einer Bildfrequenz von mindestens 500 Hz aufgenommen werden.

14. Verfahren nach einem der Ansprüche 9 bis 13, **dadurch gekennzeichnet, dass** zum Aufnehmen jedes der Bilder eine Belichtungszeit verwendet wird, die zwischen 5% und 50% eines zeitlichen Abstandes zwischen den unmittelbar aufeinanderfolgenden Aufnahmezeitpunkten beträgt.

15. Verfahren nach einem der Ansprüche 9 bis 14, **dadurch gekennzeichnet, dass** die Muster als zeitlich veränderliche Moire-Muster durch zwei der Musterstrukturen (8) oder durch zwei gleichzeitig durchleuchtete Teile der Musterstruktur (8) des Projektors (2) erzeugt werden, wobei die zwei Musterstrukturen (8) oder die zwei gleichzeitig durchleuchteten Teile der Musterstruktur (8) relativ zueinander bewegt werden.

## Claims

1. A device for spatially measuring surfaces, comprising a projector (2) for projecting patterns into an object space, two cameras (3) for recording images of a surface (1) in the object space, said surface to be measured, and a control and evaluation unit (5) for activating the cameras (3) and for evaluating the images recorded by these,
wherein the projector (2) comprises a light source (6), a projection lens (7) and at least one rotatably arranged pattern structure (8) as an imaging element, as well as a drive (9) for rotating the at least one pattern structure (8) and
wherein the control and evaluation unit (5) is configured to carry out the following steps:
- activating the cameras (3) for simultaneously recording images at each of a multitude of successive points in time of recording, so that a sequence of brightness values is acquired for points in image planes of each of the cameras (3),
- identifying corresponding points (11) in the image planes of the cameras (3), by way of evaluating a correlation function between the sequences of brightness values acquired for potentially corresponding points and maximizing a value of a thus formed correlation,
- determining spatial coordinates of surface points (10) on the surface (1) by way of triangulation on the basis of the points (11) identified as being corresponding,
wherein the at least one pattern structure (8) is designed in the shape of a rotatable disc or a rotatable cylinder surface or of a rotating belt which is closed, is led around at least two rollers, and is rotatable by the rotation of the rollers in the belt direction, and wherein the pattern structure (8) comprises an aperiodic strip pattern with strips which are orientated in the radial direction of the disc or parallel to an axis of symmetry of the cylinder surface or transversely to the belt direction.

2. A device according to claim 1, **characterised in that** the strip pattern has a sinusoidal brightness gradient in an environment of each of the strips or of some of the strips, wherein a spatial frequency of the strip pattern is not constant in a direction transverse to the strips.

3. A device according to one of the claims 1 or 2, **characterised in that** the drive (9) is configured to rotate the at least one pattern structure (8) in a continuous manner at a uniform speed, wherein the control and evaluation unit (5) is configured to activate the cameras (3) such that a multitude of images is recorded by each of the cameras (3) during a single complete or partial revolution of the at least one pattern structure (8).

4. A device according to one of the claims 1 or 3, **characterised in that** the pattern structure comprises a binary pattern for producing the patterns which are projected into the object space.

5. A device according to one of the claims 1 to 4, **characterised in that** the control and evaluation unit (5) is configured to activate the camera (3) for recording the images at an image frequency of at least 500 Hz.

6. A device according to one of the claims 1 to 5, **characterised in that** the cameras (3) and the control and evaluation unit (5) are configured such that an exposure time which is used for recording each of the images is between 5% and 50% of a temporal interval between the directly consecutive recording points in time.

7. A device according to one of the claims 1 to 6, **characterised in that** the projector (2) comprises two of the pattern structures (8) or two simultaneously through-illuminated parts of the pattern structure (8), said pattern structures or parts of the pattern structure being movable relative to one another by the drive (9) for producing temporally changing Moire patterns.

8. A device according to one of the claims 1 to 7, **characterised in that** the light source (6) is an arc lamp or a gas discharge lamp.

9. A method for spatially measuring surfaces, comprising the following steps:
- projecting temporally changing patterns onto a surface (1) to be measured, by way of a projector (2) which comprises a light source (6), a projection lens (7) and at least one rotating pattern structure (8) as an imaging element,
- simultaneously recording an image of the surface (1) with each of two cameras (3) at each of a multitude of successive recording points in time during the projecting, so that a sequence of brightness values is acquired for points in image planes of the cameras (3),
- identifying corresponding points (11) in the image planes of the cameras (3) by way of evaluating a correlation function between the sequences of brightness values acquired for potentially corresponding points and maximizing a value of a thus formed correlation,
- determining spatial coordinates of surface points (10) on the surface (1) by way of triangulation on the basis of the points (11) identified as being corresponding,
wherein at least one rotating disc or at least one rotating cylinder surface or a closed belt which is led around at least two rollers and rotates by rotation of the rollers in the belt direction is used as a pattern structure (8) of the projector (2) and wherein the patterns are produced by an aperiodic strip pattern of the at least one pattern structure (8) with strips which are orientated in the radial direction of the disc or parallel to an axis of symmetry of the cylinder surface or transversely to the belt direction.

10. A method according to claim 9, **characterised in that** the strip pattern has a sinusoidal brightness gradient in an environment of each of the strips or of some of the strips, wherein a spatial frequency of the strip pattern is not constant in a direction transverse to the strips.

11. A method according to one of the claims 9 to 10, **characterised in that** the at least one pattern structure (8) is continuously rotated at a uniform speed by way of a drive (9) during the projecting of the patterns and the recording of the images, wherein a multitude of the images is recorded by each of the cameras (3) during a single complete or partial revolution of the at least one pattern structure (8).

12. A method according to one of the claims 9 or 11, **characterised in that** the patterns which are projected onto the surface (1) are produced by a binary pattern of the at least one pattern structure (8).

13. A method according to one of the claims 9 to 12, **characterised in that** the images are recorded at an image frequency of at least 500 Hz.

14. A method according to one of the claims 9 to 13, **characterised in that** an exposure time which is between 5% and 50% of a temporal interval between the directly consecutive recording points in time is used for recording each of the images.

15. A method according to one of the claims 9 to 14, **characterised in that** the patterns are produced as temporally changing Moire patterns by way of two of the pattern structures (8) or by way of two simultaneously through-illuminated parts of the pattern structure (8) of the projector (2), wherein the two pattern structures (8) or the two simultaneously through-illuminated parts of the pattern structure (8) are moved relative to one another.

## Revendications

1. Dispositif pour la mesure spatiale de surfaces, comprenant un projecteur (2) pour la projection de motifs dans un espace d'objet, deux caméras (3) pour les prises de vue d'une surface (1) à mesurer dans l'espace d'objet, et une unité de commande et d'analyse (5) pour la commande des caméras (3) et l'analyse des images enregistrées avec celles-ci,
le projecteur (2) comprenant une source de lumière (6), un objectif de projection (7) et au moins une structure de motifs (8) disposée de manière à pouvoir tourner en tant qu'élément d'imagerie ainsi qu'un entraînement (9) pour faire tourner la au moins une structure de motifs (8) et
l'unité de contrôle et d'analyse (5) étant disposée à effectuer les étapes ci-après :
- Commande des caméras (3) pour la prise de vue simultanée d'une image à la fois lors d'une multitude de moments de prise de vue successifs, de sorte qu'une séquence de valeurs de luminosité soit saisie pour des points dans les plans d'image des caméras (3),
- Identification des points correspondants (11) dans les plans d'image des caméras (3) en évaluant une fonction de corrélation entre les séquences de valeurs de luminosité saisies pour les points potentiellement correspondants et en maximisant une valeur d'une corrélation ainsi créée,
- Détermination de coordonnées spatiales de points de surface (10) sur la surface (1) par triangulation sur la base des points (11) identifiés comme étant correspondants,
la au moins une structure de motifs (8) étant conçue sous la forme d'un disque rotatif ou d'une surface de cylindre rotative ou d'une courroie sans fin guidée autour d'au moins deux rouleaux et pouvant tourner dans la direction de la courroie par la rotation des rouleaux, et la structure de motifs (8) présentant un motif à rayures apériodique dont les rayures sont orientées dans la direction radiale du disque ou parallèlement à un axe de symétrie de la surface de cylindre ou transversalement par rapport à la direction de la courroie.

2. Dispositif selon la revendication 1, **caractérisé en ce que** le motif à rayures présente une courbe de luminosité sinusoïdale respective au voisinage de chacune des rayures ou de certaines des rayures, une fréquence spatiale du motif de rayures n'étant pas constante dans une direction transversale par rapport aux rayures.

3. Dispositif selon l'une des revendications 1 ou 2, **caractérisé en ce que** l'entraînement (9) est agencé pour faire tourner la au moins une structure de motifs (8) en continu à une vitesse régulière, l'unité de commande et d'analyse (5) étant configurée pour commander les caméras (3) de telle manière que chacune des caméras (3) fera une multitude de prises de vue pendant une seule rotation complète ou partielle de la au moins une structure de motifs (8).

4. Dispositif selon l'une quelconque des revendications 1 ou 3, **caractérisé en ce que** la structure des motifs comprend un motif binaire pour générer les motifs projetés dans l'espace d'objet.

5. Dispositif selon l'une quelconque des revendications 1 à 4, **caractérisé en ce que** l'unité de commande et d'analyse (5) est configurée pour commander les caméras (3) pour les prises de vue à une fréquence d'image de 500 Hz au moins.

6. Dispositif selon l'une quelconque des revendications 1 à 5, **caractérisé en ce que** les caméras (3) et l'unité de commande et d'analyse (5) sont configurées de telle sorte qu'un temps d'exposition appliqué à chacune des prises de vue est compris entre 5% et 50% d'un intervalle de temps entre les moments de prise de vue immédiatement successifs.

7. Dispositif selon l'une quelconque des revendications 1 à 6, **caractérisé en ce que** le projecteur (2) comprend deux des structures de motifs (8) ou deux parties de la structure de motifs (8) simultanément éclairées mobiles l'une par rapport à l'autre grâce à l'entraînement (9) pour produire des motifs moirés changeant avec le temps.

8. Dispositif selon l'une quelconque des revendications 1 à 7, **caractérisé en ce que** la source lumineuse (6) est une lampe à arc ou une lampe à décharge de gaz.

9. Une méthode de mesure spatiale de surfaces, comprenant les étapes ci-après :
- Projection de motifs changeant dans le temps sur une surface (1) à mesurer au moyen d'un projecteur (2) qui comporte une source de lumière (6), un objectif de projection (7) et au moins une structure de motifs (8) tournant comme élément d'imagerie,
- Prise de vue simultanée d'une image de la surface (1) à la fois avec chacune de deux caméras (3) à une multitude de moments de prise de vue successifs pendant la projection, de sorte qu'une séquence de valeurs de luminosité soit saisie pour des points dans les plans d'image des caméras (3),
- Identification des points correspondants (11) dans les plans d'image des caméras (3) en évaluant une fonction de corrélation entre les séquences de valeurs de luminosité enregistrées pour les points potentiellement correspondants et en maximisant une valeur d'une corrélation ainsi formée,
- Détermination de coordonnées spatiales de points de surface (10) sur la surface (1) par triangulation sur la base des points (11) identifiés comme étant correspondants,
le au moins un disque rotatif ou la au moins une surface de cylindre rotative ou une courroie sans fin guidée autour d'au moins deux rouleaux et pouvant tourner dans la direction de la courroie par la rotation des rouleaux étant utilisée comme une structure de motifs (8) du projecteur (2) et les motifs étant créés par un motif à rayures apériodique de la au moins une structure de motifs (8) avec des rayures orientées dans la direction radiale du disque ou parallèlement à un axe de symétrie de la surface de cylindre ou transversalement par rapport à la direction de la courroie.

10. Procédé selon la revendication 9, **caractérisé en ce que** le motif à rayures présente une courbe de luminosité sinusoïdale respective au voisinage de chacune des rayures ou de certaines des rayures, une fréquence spatiale du motif à rayures n'étant pas constante dans une direction transversale par rapport aux rayures.

11. Procédé selon l'une quelconque des revendications 9 ou 10, **caractérisé en ce que** ladite au moins une structure de motifs (8) est continuellement mise en rotation à une vitesse régulière par un entraînement (9) de telle manière que chacune des caméras (3) fera une multitude de prises de vue pendant une seule rotation complète ou partielle de la au moins une structure de motifs (8).

12. Procédé selon l'une des revendications 9 ou 11, **caractérisé en ce que** les motifs projetés sur la surface (1) sont générés par un motif binaire de la au moins une structure de motifs (8).

13. Méthode selon l'une quelconque des revendications 9 à 12, **caractérisée en ce que** les images sont enregistrées à une fréquence d'image d'au moins 500 Hz.

14. Procédé selon l'une quelconque des revendications 9 à 13, **caractérisé en ce qu'**un temps d'exposition appliqué à chacune des prises de vue est compris entre 5% et 50% d'un intervalle de temps entre les moments de prise de vue immédiatement successifs.

15. Procédé selon l'une quelconque des revendications 9 à 14, **caractérisé en ce que** les motifs sont générés sous forme de motifs de moiré variant par deux des structures de motifs (8) ou par deux parties éclairées simultanément de la structure de motifs (8) du projecteur (2), les deux structures de motifs (8) ou les deux parties éclairées simultanément de la structure de motifs (8) étant déplacées l'une par rapport à l'autre.
